# EUROPEAN PATENT SPECIFICATION

(11) **EP 4 199 700 B1**
(45) Date of publication and mention of the grant of the patent: **02.04.2025**
(21) Application number: 21765995.2
(22) Date of filing: 11.08.2021
(51) Int. Cl.: A01G 9/24, A01G 31/06, A01G 9/14

(54) **A SYSTEM FOR CONTROLLING AND MANAGING HYDROPONIC OR SIMILAR CULTIVATIONS ON MODULAR SHELVES**
SYSTEM ZUR STEUERUNG UND VERWALTUNG VON HYDROPONISCHEN ODER ÄHNLICHEN KULTUREN AUF MODULAREN REGALEN
SYSTÈME DE COMMANDE ET DE GESTION DE CULTURES HYDROPONIQUES OU SIMILAIRES SUR DES ÉTAGÈRES MODULAIRES

(30) Priority: 21.08.2020 IT 202000020326
(43) Date of publication of application: 28.06.2023
(73) Proprietor: ONO EXPONENTIAL FARMING S.R.L., 37057 San Giovanni Lupatoto (VR) (IT)
(72) Inventor: AMBROSI, Thomas, 37057 San Giovanni Lupatoto (Verona) (IT)
(74) Representative: Sandri, Sandro
(86) International application number: PCT/IB2021/057403
(87) International publication number: WO 2022/038462

(56) References cited:
- EP-A1- 3 326 452
- JP-A- 2015 213 491
- KR-A- 20120 026 743
- KR-B1- 101 405 345
- US-A1- 2019 307 077

## Description

### FIELD OF APPLICATION

The present invention relates to a system for controlling and managing hydroponic cultivations located on modular shelves, otherwise known as vertical farming.

It is a control system comprising a control and management station located inside a series of modular shelves arranged adjacent to one another, in which various vegetable crops are arranged, contained in respective movement trays.

In such control and management station there are detection systems useful for checking the status of the cultivations in progress, i.e. able to diagnose the specific situation in which the vegetables are found and to establish any corrections to be applied to the nutrient elements.

The present invention is advantageously applied in the sector systems for controlling and managing modular structures with a vertical layout intended for hydroponic, aeroponic and aquaponic farming or other similar structures that require the controlled movement of crops, or the like.

### PRIOR ART

In the state of the art various methods are known for the aeroponic and hydroponic farming of plants or vegetables above ground, where the soil is replaced by a suitable substrate and one of such methods envisages the vegetables being individually inserted into relevant containers distributed inside trays placed on various levels of a modular structure, known as a vertical farm, so that the root system of each plant remains inserted in a relevant nutritional liquid composed of water enriched with the essential elements for normal mineral nutrition, or peat in the case of crops in soil, where the roots remain in the substrate to look for the nutrients inside the container containing the peat or coconut fibre periodically soaked in solution, or the vermiculite or other not necessarily inert substrates.

Such modular structures are generally composed of four uprights that enable the positioning of a plurality of shelves intended to contain said trays, adapted to form, together with the uprights, modular shelves having a substantially parallelepiped conformation.

Such modular structures contain equipment suitable for the containment and development of the vegetables inserted into the respective trays placed on the various levels of the respective structure, i.e. irrigation, lighting, ventilation and climate control systems and systems for the movement of the trays inside the structure or towards the loading/unloading stations.

Normally the hydroponic farming systems, even those arranged in vertical farms, are not able to effectively simulate the micro-climate suitable for each type of vegetable, as up to now no modular systems are envisaged to enable the plant development of the different plantations, particularly systems able to bring about the necessary modifications and corrections when necessary.

In particular, up to now, no systems are provided for the control, verification and possible automatic integration and correction of the development parameters, or even systems for the verification and modification of the arrangement of the various trays on the basis of different treatment areas, and it is therefore impossible to optimise the spaces during the development in height of the farmed vegetables.

All this has a negative effect on the development of the plants which actually remains limited in control, with the possibility that the cultivations do not develop correctly with a certain percentage of waste.

Furthermore, the absence of an assiduous system for verifying the vegetal development of the farmed plants means that the trays must be placed at the maximum distance envisaged for their complete development, with notable waste in terms of spaces between the various trays superposed on the same module, which initially, i.e. in the period subsequent to insemination, remain substantially empty.

Document US 2019307077 A1, according to its abstract, discloses a vertical farming system including a storage structure having racks of storage shelves for housing plant-carrying containers. Mobile robots travel around the racks to transfer containers of plants to and from the storage shelves. Under direction of a central control system, one or more mobile robots may transport a container from a storage location to a workstation. Once there, care may be provided for the plant, including water and/or other nutrients, and data may be gathered on the plant. This may be done by an owner of the plant, or by an automated service robot positioned at the workstation. Data gathered on the plant, including for example photographs, may be sent by email or other communications schemes to an owner of the plant.

Document EP 3326452 A1, according to its abstract, discloses an illuminated cultivation storage system and a method for cultivating crops in an illuminated cultivation storage system. The system comprises a three-dimensional framework structure forming a grid of vertical and horizontal storage tunnels, a plurality of storage containers for holding growing crops. The storage containers being configured to be introduced into the framework structure. The system further has a plurality of lighting device, a transport system, and an illumination controller. Further, the interior of the framework structure exhibits distinguishable climate zones, each climate zone having a set of growth parameters including temperature. The system further comprises a growth monitoring station which includes sensors for determining a current growth status of crops and a growth controller connected to the transport system and being configured to operate the transport system in order to return storage containers to a designated climate zone based on the determined growth status.

### DESCRIPTION OF THE INVENTION

The present invention intends to make available a control and management system comprising a station for controlling and managing hydroponic cultivations on modular shelves, otherwise known as vertical farming, which is able to eliminate or at least reduce the drawbacks highlighted above.

This is achieved by a system having the features described at claim 1. The dependent claims outline particular forms of embodiment of the system.

The invention sets out in particular to provide a control and management station which is placed inside one of the modular shelves arranged adjacent to one another, so that the crops to be analysed contained in respective modular movement spaces can be transported there.

In such control and management station, there are detection systems using sensors which are useful for verifying the status of the cultivations in progress, in particular:
- the leaf coverage, by means of cameras the information system compares images captured at different moments and detects the leaf expansion variations;
- the height of the vegetable, by means of stereoscopic cameras the system detects height variations with respect to previous and saved moments;
- colour analysis;
- the collection of the residual nutrient solution in the trays and the analysis of the characteristic values (pH, oxygenation, electrical conductivity, etc.)

The information collected is handled by software included in the system which processes it by analysing the statuses with the expected ones with respect to a set of parameters taken from the typical growth curves, from the expected statuses of nutrient consumption detected by the data coming from the residual solution, if necessary compensating for any deficiencies with the integration of nutrients or whatever is required.

In this area actuators are also provided, which enable the nutrients to be brought into the tank and in aerial mode, whether they are in liquid or gaseous form.

The system according to the invention enables the trays containing the crops to be controlled and positioned at different distances from one another, by varying the vertical positioning pitch on the basis of the development of the vegetables, with distance increases by about 100mm or even less vertically for better fragmentation and freedom of possible combinations.

This is obtained by exploiting the possibility to handle the cultivations during their growth according to certain but not rigid rules on exposure to light sources which are used to trigger photosynthesis or to trigger desired extensions or limitations of the stem of the plants.

The system according to the invention enables the various shelves to be assembled or designed, so as to create contiguous, modular and scalable growth environments, wherein every environment is separated from the outside and from other environments of the same type by insulating walls. Such environments are placed in communication by a passage openable on command through which the crops are transitable on a tray.

Each of these environments can be handled in a differentiated way in relation to the internal environmental parameters. The temperature, humidity, gas concentration or other parameters according to requirements can be differentiated and personalised.

### ILLUSTRATION OF THE DRAWINGS

Further features and advantages of the invention will become apparent from reading the following description of an embodiment of the invention provided by way of nonlimiting example, with the aid of the drawings illustrated in the appended tables of drawings, in which:
- figure 1 represents a front schematic view highlighting a modular shelf in which trays and respective lighting elements placed on different levels are inserted;
- figures 2, 3 and 4 illustrate front schematic views of three different configurations in the management of the trays with the same amount of space;
- figure 5 is a front schematic view of an example of vertical farm comprising three modular shelves each of which has diversified management areas based on different parameters established by the control and management station;
- figure 6 represents a front schematic view of a control and management station according tc the invention;
- figures 7 to 10 represent schematic views of a first carriage intended for dosing and introducing corrective nutrients into the trays of the controlled hydroponic crops;
- figures 11 to 15 represent schematic views of a second carriage external to the growth area intended for the quality analysis of the controlled vegetables, the mixing of the corrective components and their pumping into the hydroponic system.

### DESCRIPTION OF AN EMBODIMENT OF THE INVENTION

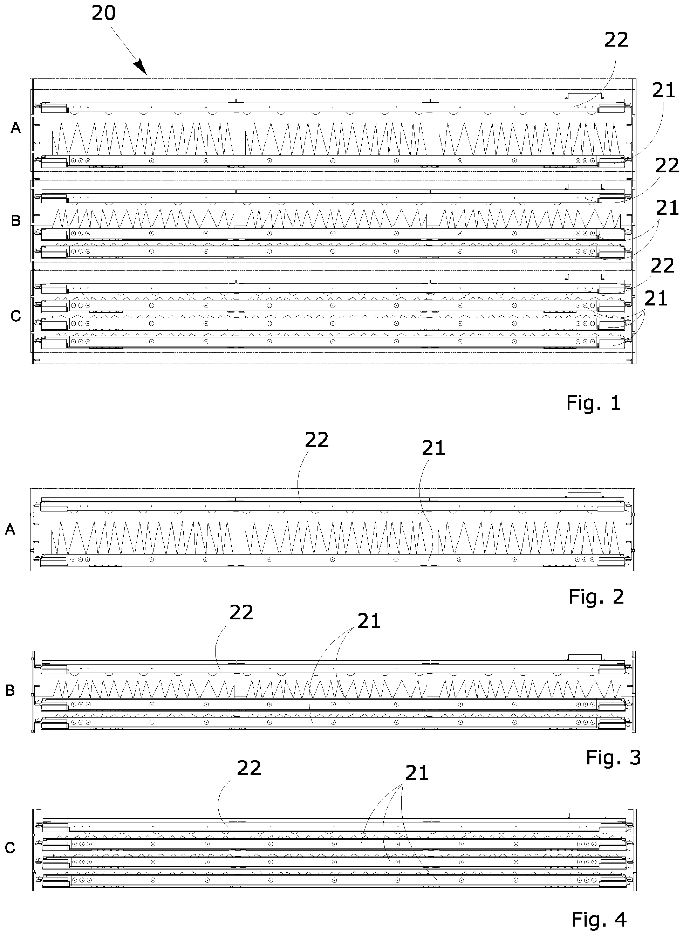

With reference to the appended figures, and initially in particular to figure 1, 20 denotes in its entirety a modular shelf comprising, in this case, three modular spaces A, B, C adapted to house a plurality of trays 21 alternating with a respective plurality of luminous bars 22, arranged on respective supports located at predefined distances.

The trays and the luminous bars are arranged on supports distanced in a standardised way from one another vertically, inside respective modular spaces A, B, C, and figures 2, 3 and 4 represent different allocation configurations of the trays containing the crops.

Configuration A, which is better highlighted in figure 2, comprises a single tray 21 placed below a single luminous bar 22 and in this case the vegetables contained have reached the maximum development envisaged for that modular space.

Configuration B, which is better highlighted in figure 3, comprises a pair of trays 21 placed below a single luminous bar 22 and in this case the lower tray comprises sprouted plants whereas in the upper one the vegetables contained have reached an intermediate development.

Configuration C, which is better highlighted in figure 4, comprises three single trays 21 placed below a single luminous bar 22 and in this case all three trays comprise sprouted plants, which require minimal space.

This system is made so as to be able to position the trays containing the crops at different distances from one another. The positioning pitch vertically can for example be about 100mm but it could also be 50mm or a different measurement for better fragmentation and freedom of possible combinations.

A vegetable grows over time according to generally sigmoid shaped curves and the initial sprouting step takes up much of the growth time. In this period the plant does not grow in height, the formation process of the stem and first leaves and the root system begins, and in this phase it does not occupy any space in height.

It is therefore possible to compact the trays on top of one another and to position them immediately below others or even position them exactly one step below the luminous bars for photosynthesis.

Once the germination period has finished, and thanks to the detection of the sensors connected to a control station, the trays are positioned at a suitable distance from the bottom of the other trays or from the luminous bars.

This system offers the possibility to handle the cultivations during their growth according to certain but not rigid rules on exposure to light sources which are used to trigger photosynthesis and different growth effects.

The movement possibility for the trays which can be positioned at different distances vertically, rather than in predetermined fixed positions typical of a classic rigid structure known in the state of the art enables the following main advantages to be obtained:
- The trays can be positioned below different types of light sources with specialised emission according to the effects to be reached;
- Unlike the normal indoor conditions under artificial light, where the trays are generally unmovable, or moved manually, and the lights are generally of only one type or of mixed type, in the system according to the invention there may be different light sources present in different positions inside a module. In the event in which LED luminous bars are used, it is envisaged that the lamps may have only one specific type of LED for each position and in this way the cost for the light sources decreases due to the lack of any other electronic light emission elements for the components;
- The positioning at distances with a smaller pitch than the final height of the plant, with the lowest distance possible from the light sources, with net optimisation of the available spaces.

In normal indoor vertical farms the distance from the light sources is fixed for the entire growth time, from germination or straight after germination (if this takes place in specific rooms), until the end of growth. Therefore, from the first moment of exposure the lamps must emit the maximum number of photons to reach the leaves and trigger photosynthesis. The energy supply for obtaining such exposure is maximum right from the start.

On the contrary, the system according to the invention enables Lambert's law to be exploited, according to which with the same fluence (micro-moles to the leaf expressed in micro-Einstein) the energy input (electrical for LEDs) depends on the square of the distance. E=I/r² where "E" is the radiation or expected fluence, "I" the energy input, "r" the distance between the emitter (e.g. LED) and the radiated part (the leaves).

This means that as the trays can be moved closer to a correct distance from the lamps, during the growth phases, the energy saving is quadratic.

From the following table it is clear that in order to obtain the same fluence result at the leaf it is necessary to provide an energy factor sixteen times higher in the case of differences if the difference between position 1 and position 4 is compared:

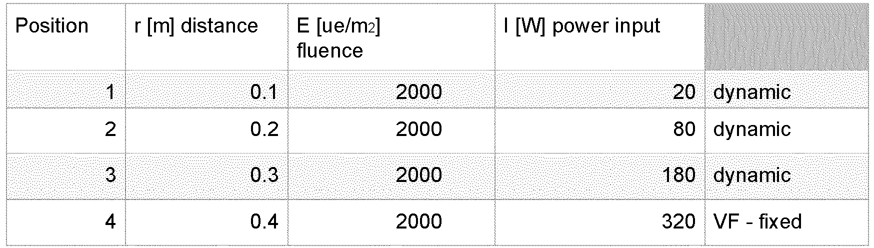

During growth the system according to the invention envisages the possibility to move the plant towards or away from the light source in steps, thanks to the data detected by the control and management station, therefore dynamically following the need to radiate the leaf and saving on the energy input.

Therefore an adaptive and dynamic radiation system is obtained, which can be handled independently and automatically in indoor vertical farming, with the possibility to flexibly manage the plant according to the physiological needs, optimising its exposure to the light source as appropriate and managing the distance so as to also obtain notable energy savings.

It is to be noted that in the period in which the plants stay in the various positions according to the modular configurations B and C (figures 3 and 4), below the illuminated trays it is possible to position other trays which at that time do not need light (night or dark phase), enabling the occupation of the crops in the volume to be optimised.

Another advantage is also obtained, i.e. that the CO₂ generated in the dark phase by the plants is used by the plants placed below the light source, generating a half-closed cycle that is partially self-powered.

This case also highlights the saving that occurs thanks to the fact that the lights are not switched off at the time when dark is necessary but there are simply no lamps to switch off, and the trays are moved into dark areas, e.g. below other trays, respecting the necessary spaces.

Therefore, fewer lamps are required with respect to a static vertical farm where the same number of light areas as the farming trays need to be installed, whereas in the system according to the invention, the quantity will always be lower. When dark is needed the lamps are not required, hence the saving in structural costs.

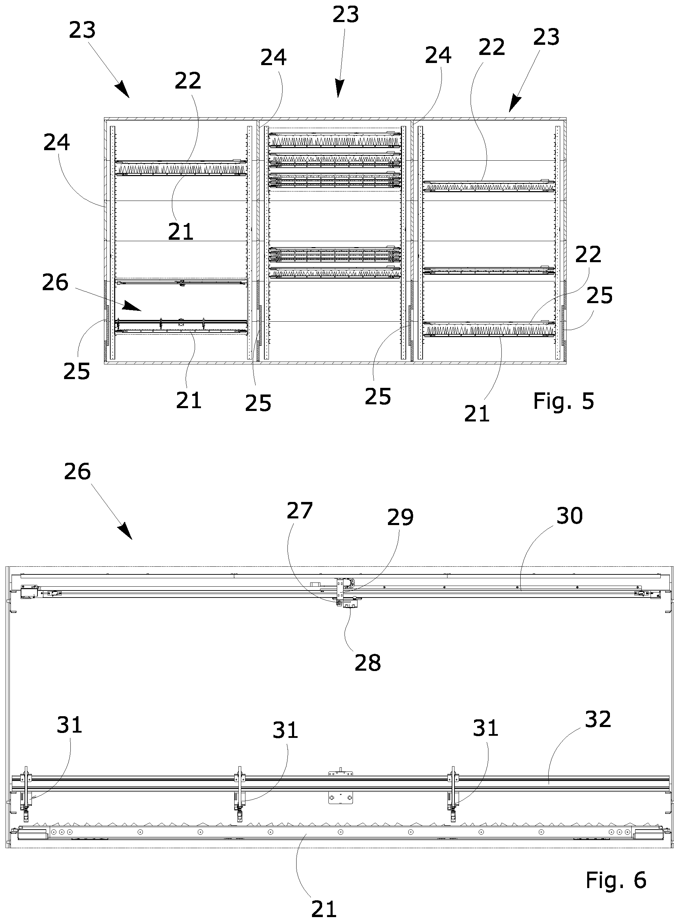

According to the invention represented in figure 5, the modular shelves 23 that compose a vertical farm are constituted by contiguous, modular and scalable growth environments. That is, every modular shelf constitutes a growth environment and is separated from the outside and from other environments of the same type, physically by means of insulating walls 24.

The various modular shelves 23 are placed in communication with one another through passages 25, openable on command, through which it is possible to make the crops transit on a tray from one modular shelf to another.

Each of these environments can be handled in a differentiated way in relation to the internal environmental parameters. The temperature, humidity, gas concentration and all the aerial parameters inside each modular shelf 23 can be differentiated.

This system enables the crops to be moved from one environment to another during the time spent inside the modules, so as to obtain an improvement in the growth conditions and without the physical intervention of a human.

It is to be underlined that all this enables a management of the crops without "growth accelerators" which are not natural and intrinsic in the physiology of the plant.

All the technical peculiarities of the system according to the invention are oriented so as to follow as best as possible the natural growth of the plants according to their biological laws. By moving a tray from one climatic area to another it is therefore possible to follow the natural reactions of the vegetables so as to follow the generation of molecules for the growth, defence, strengthening and organoleptic and nutritional properties.

This dynamic condition which can be actuated by the system independently, as a function of the growth results detected with the dedicated sensors in the control areas, enables a dynamic period climate system to be exploited, with the possibility to assign different climatic moments to different crops during the period of their formation and growth in an adaptive or programmed way.

According to the invention, for the management of the farming trays described above an area is provided inside a modular shelf, into which the crops contained in movement trays are taken for their analysis.

As illustrated in figure 6, such an area is defined by a control and management station 26 in which sensor control systems are located that are suitable for the detection of a status of the cultivations in progress. In particular:
- the leaf coverage is analysed by means of cameras 27 connected to an information system which compares the images captured at different moments and detects the leaf expansion variations;
- the height of the vegetable is detected by means of stereoscopic cameras 27 which measure height variations with respect to previous and saved moments;
- the same cameras 27 also analyse the colour parameters.

The cameras 27 are combined with an aerial irrigation or spraying system 28, and the whole is placed on a carriage 29 which slides on a crosspiece 30 placed in the upper area of the station 26.

According to the embodiment of figure 6, the use of suitable actuators 31 is also envisaged, for the purpose of collecting the residual nutrient solution in the trays and of introducing new or integrative solution. Such actuators 31, placed on further respective carriages sliding on a crosspiece 32, send the samples to a sector for analysing the characteristic values such as the pH, oxygenation, electrical conductivity, or the like.

The information collected is handled by the software of the system which processes it by analysing the statuses with the expected ones with respect to a set of parameters taken from the typical growth curves, from the expected statuses of nutrient consumption detected by the data coming from the residual solution.

Once the data have been processed, the information system assesses the management of the continuation of the crop possibly varying the following parameters:
- the concentration and mixture of nutrients to be sent into aqueous solution in the tanks present in the control and management station 26;
- the amount of litres to be introduced in order to compensate for what is consumed.

It is also possible for the control and management station 26 to handle in a different way the subsequent positioning of the tray inside the modular shelves, assigning different lighting or distances.

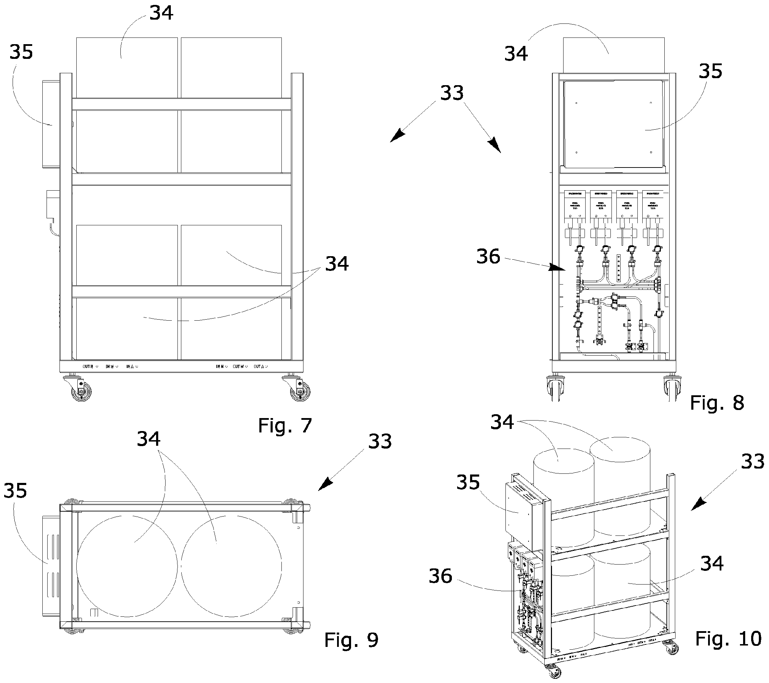

Figures 7 to 10 represent a first carriage 33 intended for dosing and introducing corrective nutrients in the trays of the controlled hydroponic crops.

It is possible to highlight in such carriage the presence of nutrient reservoirs 34, an electrical control panel 35 and a hydraulic dosing central control unit 36.

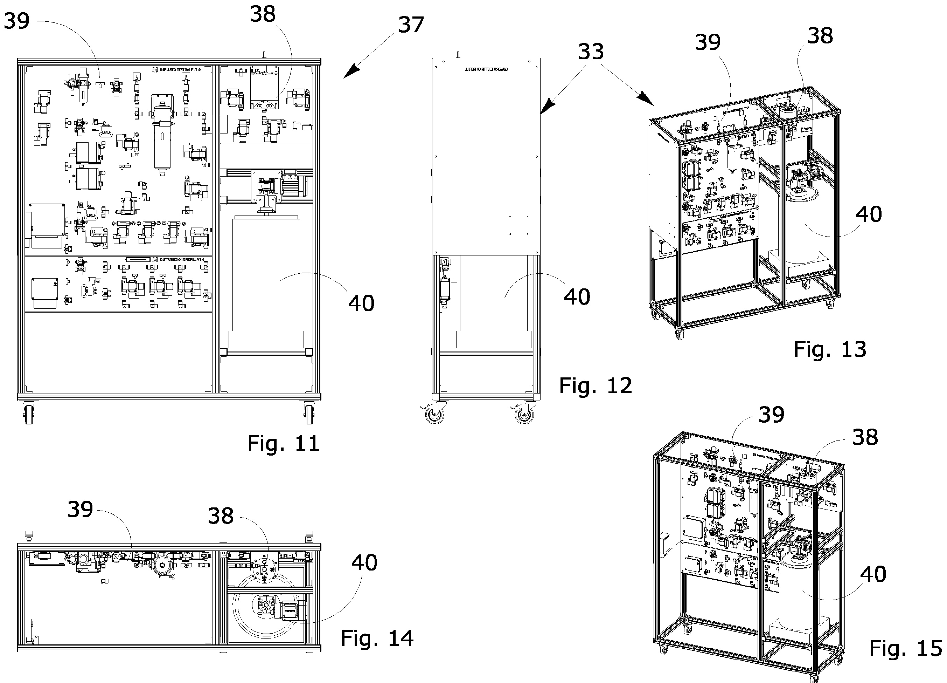

Finally, figures 11 to 15 represent schematic views of a second carriage 37 intended for the quality analysis of the controlled residual nutrients, the mixing of the corrective components and their pumping into the hydroponic system.

In this case such a carriage 37 comprises a value analysis unit 38, a hydraulic pumping unit 39 and a mixing unit 40 of the corrective nutrients to be introduced into the trays of the controlled hydroponic crops.

## Claims

1. A system for controlling and managing hydroponic or similar cultivations positioned inside at least one modular shelf (20, 23), wherein the at least one modular shelf (20, 23) comprises a plurality of modular spaces (A, B, C) each adapted to contain at least one tray (21) for containing vegetable crops and a light source (22) adapted to illuminate said tray for containing the vegetable crops, each modular space (A, B, C) being provided with support elements for the tray, vertically separated by predetermined distances, wherein the tray (21) can be moved inside each modular shelf (23),
wherein said at least one modular shelf (20, 23) further comprises a modular space adapted to house the tray (21) inside which space a control and management station (26) operates, comprising sensors able to determine the biological parameters of the vegetable crops, and actuators (31) able to correct said biological parameters for bringing them back to predetermined growth values, wherein the system comprises a plurality of modular shelves (20, 23) arranged adjacent to one another and which each define a growth environment for vegetable crops, each environment being separated from the outside and from other environments of the same type, by insulating walls (24),
the system being **characterised in that** at least two of said modular shelves (20, 23) are placed in mutual communication by at least one passage (25), which can be opened or closed on command, through which the crops are transitable on the tray,
wherein said at least one passage (25) is arranged at the modular space inside which said control and management station (26) operates.

2. The system according to claim 1, **characterised in that** each environment is managed in a differentiated way in terms of the internal environmental parameters of temperature, humidity and gas concentration.

3. The system according to one of the preceding claims, **characterised in that** the control and management station (26) comprises sensors for the detection of the leaf coverage which is analysed by means of cameras (27) connected to an information system which is configured to compare the images captured at different moments containing information related to leaf expansion variations of the vegetable crops and to transmit such information to a further information system which is configured to compare the images captured at different moments, to detect the vegetative variations of the crops, and to set any corrective values.

4. The system according to the preceding claims, **characterised in that** the actuators (31) are configured to collect samples of residual nutrient solution possibly present in a tray and to send the samples to a sector for the analysis of characteristic parameters.

5. The system according to claim 4, **characterised in that** the information collected inside the control and management station (26) is handled by a control system software which is configured to compare the detected statuses with those expected with respect to a set of parameters taken from typical growth curves, and the expected nutrient consumption statuses detected from data coming from the residual solution.

6. The system according to any one of the preceding claims, **characterised in that** it comprises a first carriage (33) intended for dosing and introducing corrective nutrients in the trays of the controlled hydroponic crops, said carriage comprising nutrient reservoirs (34), an electrical control panel (35) and a hydraulic dosing central control unit (36).

7. The system according to claim 6, **characterised in that** it comprises a second carriage (37) intended for the analysis of the quality of the controlled residual nutrients, for mixing the corrective components and for pumping them into the trays containing the vegetable crops, said carriage comprising a value analysis unit (38), a hydraulic pumping unit (39) and a mixing unit (40) of the corrective nutrients to be introduced into the trays containing the vegetable crops.

## Patentansprüche

1. System zum Steuern und Managen von hydroponischen oder ähnlichen Kulturen, die innerhalb mindestens eines modularen Regals (20, 23) angeordnet sind, wobei das mindestens eine modulare Regal (20, 23) mehrere modulare Räume (A, B, C) aufweist, die jeweils dazu ausgebildet sind, mindestens eine Wanne (21) zum Aufnehmen von Gemüsepflanzen und eine Lichtquelle (22), die dazu ausgebildet ist, die Wanne zum Aufnehmen der Gemüsepflanzen zu beleuchten, zu enthalten, wobei jeder modulare Raum (A, B, C) mit Stützelementen für die Wanne versehen ist, die vertikal in vorbestimmten Abständen getrennt sind, wobei die Wanne (21) innerhalb jedes modularen Regals (23) bewegt werden kann, wobei das mindestens eine modulare Regal (20, 23) ferner einen modularen Raum aufweist, der dazu ausgebildet ist, die Wanne (21) aufzunehmen, wobei in diesem Raum eine Steuer- und Managementstation (26) arbeitet, welche Sensoren, die in der Lage sind, die biologischen Parameter der Gemüsepflanzen zu bestimmen, und Aktuatoren (31), die in der Lage sind, die biologischen Parameter zu korrigieren, um diese auf vorbestimmte Wachstumswerte zurückzubringen, aufweist, wobei das System mehrere modulare Regale (20, 23) aufweist, die einander benachbart angeordnet sind und jeweils eine Wachstumsumgebung für Gemüsepflanzen definieren, wobei jede Umgebung von dem Außenbereich und von anderen Umgebungen derselben Art durch Isolierwände (24) getrennt ist, wobei das System **dadurch gekennzeichnet ist, dass** mindestens zwei der modularen Regale (20, 23) durch mindestens einen Durchgang (25) in Kommunikation miteinander angeordnet sind, der mittels Befehl geöffnet oder geschlossen werden kann und durch den die Pflanzen auf der Wanne passieren können, wobei der mindestens eine Durchgang (25) an dem modularen Raum angeordnet ist, in dem die Steuer- und Managementstation (26) arbeitet.

2. System nach Anspruch 1, **dadurch gekennzeichnet, dass** jede Umgebung in Bezug auf die internen Umgebungsparameter Temperatur, Feuchtigkeit und Gaskonzentration auf differenzierte Weise gemanagt wird.

3. System nach einem der vorhergehenden Ansprüche, **dadurch gekennzeichnet, dass** die Steuer- und Managementstation (26) Sensoren zum Detektieren der Blattabdeckung aufweist, die mittels Kameras (27) analysiert wird, welche mit einem Informationssystem verbunden sind, das dazu konfiguriert ist, die zu unterschiedlichen Zeitpunkten erfassten Bilder, die Informationen bezüglich Blattausdehnungsschwankungen der Gemüsepflanzen enthalten, zu vergleichen und derartige Informationen zu einem weiteren Informationssystem zu übertragen, das dazu konfiguriert ist, die zu unterschiedlichen Zeitpunkten erfassten Bilder zu vergleichen, die vegetativen Schwankungen der Pflanzen zu detektieren und allfällige Korrekturwerte einzustellen.

4. System nach den vorhergehenden Ansprüchen, **dadurch gekennzeichnet, dass** die Aktuatoren (31) dazu konfiguriert sind, Proben von eventuell in einer Wanne vorhandener Restnährstofflösung zu entnehmen und die Proben zu einem Bereich für die Analyse von charakteristischen Parametern zu überführen.

5. System nach Anspruch 4, **dadurch gekennzeichnet, dass** die in der Steuer- und Managementstation (26) erfassten Informationen von einer Steuersystemsoftware behandelt werden, die dazu konfiguriert ist, die detektierten Zustände mit den in Bezug auf einen von typischen Wachstumskurven gewonnenen Satz Parameter erwarteten und den erwarteten Nährstoffverbrauchszuständen, die anhand von aus der Restlösung stammenden Daten detektiert werden, zu vergleichen.

6. System nach einem beliebigen der vorhergehenden Ansprüche, **dadurch gekennzeichnet, dass** es einen ersten Wagen (33) aufweist, der zum Dosieren und Einleiten korrigierender Nährstoffe in die Wannen der kontrollierten hydroponischen Pflanzen bestimmt ist, wobei der Wagen Nährstoffbehälter (34), eine elektrische Steuertafel (35) und eine hydraulische Dosierzentralsteuereinheit (36) aufweist.

7. System nach Anspruch 6, **dadurch gekennzeichnet, dass** es einen zweiten Wagen (37) aufweist, der zur Analyse der Qualität der kontrollierten Restnährstoffe, zum Mischen der korrigierenden Komponenten und zum Pumpen derselben in die die Gemüsepflanzen aufnehmenden Wannen bestimmt ist, wobei der Wagen eine Wertanalyseeinheit (38), eine hydraulische Pumpeinheit (39) und eine Mischeinheit (40) der korrigierenden Nährstoffe, die in die die Gemüsepflanzen aufnehmenden Wannen eingeleitet werden sollen, aufweist.

## Revendications

1. Système de contrôle et de gestion de cultures hydroponiques ou similaires placées à l'intérieur d'au moins une étagère modulaire (20, 23), dans lequel la au moins une étagère modulaire (20, 23) comprend une pluralité d'espaces modulaires (A, B, C) chacun adapté pour contenir au moins un plateau (21) pour contenir des cultures maraîchères et une source de lumière (22) adaptée pour éclairer ledit plateau pour contenir les cultures maraîchères, chaque espace modulaire (A, B, C) étant pourvu d'éléments de support pour le plateau, séparés verticalement par des distances prédéterminées, dans lequel le plateau (21) peut être déplacé à l'intérieur de chaque étagère modulaire (23),
dans lequel ladite au moins une étagère modulaire (20, 23) comprend en outre un espace modulaire adapté pour loger le plateau (21) à l'intérieur duquel fonctionne une station de contrôle et de gestion (26) comprenant des capteurs capables de déterminer les paramètres biologiques des cultures maraîchères, et des actionneurs (31) capables de corriger lesdits paramètres biologiques pour les ramener à des valeurs de croissance prédéterminées, dans lequel le système comprend une pluralité d'étagères modulaires (20, 23) disposées de manière adjacente les unes aux autres et qui définissent chacune un environnement de croissance pour les cultures maraîchères, chaque environnement étant séparé de l'extérieur et d'autres environnements du même type, par des parois isolantes (24),
le système est **caractérisé en ce qu'**au moins deux desdites étagères modulaires (20, 23) sont mises en communication mutuelle par au moins un passage (25), qui peut être ouvert ou fermé sur commande, par lequel les cultures peuvent transiter sur le plateau,
dans lequel ledit au moins un passage (25) est disposé dans l'espace modulaire à l'intérieur duquel opère ledit poste de contrôle et de gestion (26).

2. Système selon la revendication 1, **caractérisé en ce que** chaque environnement est géré de manière différenciée en termes de paramètres environnementaux internes de température, d'humidité et de concentration de gaz.

3. Système selon l'une des revendications précédentes, **caractérisé en ce que** la station de contrôle et de gestion (26) comprend des capteurs pour la détection de la couverture foliaire qui est analysée au moyen de caméras (27) connectées à un système d'information configuré pour comparer les images capturées à différents moments contenant des informations relatives aux variations d'expansion foliaire des cultures maraîchères et pour transmettre ces informations à un autre système d'information configuré pour comparer les images capturées à différents moments, pour détecter les variations végétatives des cultures et pour définir d'éventuelles valeurs correctives.

4. Système selon les revendications précédentes, **caractérisé en ce que** les actionneurs (31) sont configurés pour prélever des échantillons de solution nutritive résiduelle éventuellement présente dans un plateau et pour envoyer les échantillons à un secteur pour l'analyse de paramètres caractéristiques.

5. Système selon la revendication 4, **caractérisé en ce que** les informations recueillies à l'intérieur de la station de contrôle et de gestion (26) sont traitées par un logiciel de système de contrôle qui est configuré pour comparer les états détectés avec ceux attendus par rapport à un ensemble de paramètres tirés de courbes de croissance typiques, et les états attendus de consommation de nutriments détectés à partir des données provenant de la solution résiduelle.

6. Système selon l'une quelconque des revendications précédentes, **caractérisé en ce qu'**il comprend un premier chariot (33) destiné au dosage et à l'introduction des nutriments correctifs dans les plateaux des cultures hydroponiques contrôlées, ledit chariot comprenant des réservoirs de nutriments (34), un tableau de commande électrique (35) et une unité de commande centrale de dosage hydraulique (36).

7. Système selon la revendication 6, **caractérisé en ce qu'**il comprend un deuxième chariot (37) destiné à l'analyse de la qualité des nutriments résiduels contrôlés, au mélange des composants correctifs et à leur pompage dans les plateaux contenant les cultures maraîchères, ledit chariot comprenant une unité d'analyse de la valeur (38), une unité de pompage hydraulique (39) et une unité de mélange (40) des nutriments correctifs à introduire dans les plateaux contenant les cultures maraîchères.
